# EUROPÄISCHE PATENTSCHRIFT

(11) **EP 0 929 875 B1**
(45) Veröffentlichungstag und Bekanntmachung des Hinweises auf die Patenterteilung: **11.05.2005**
(21) Anmeldenummer: 98933835.5
(22) Anmeldetag: 28.07.1998
(51) Int. Cl.: G06K 11/18, G06F 3/033

(54) **KOMBINIERTER DOPPELDREHKNOPF**
COMBINED DOUBLE TURNING KNOB
DISPOSITIF A DEUX BOUTONS TOURNANTS COMBINES

(30) Priorität: 09.08.1997 DE 19734568
(43) Veröffentlichungstag der Anmeldung: 21.07.1999
(73) Patentinhaber: SIEMENS AKTIENGESELLSCHAFT, 80333 München (DE)
(72) Erfinder: KNOBL, Karl-Heinz, D-65549 Limburg (DE)
(86) Internationale Anmeldenummer: PCT/IB1998/001146
(87) Internationale Veröffentlichungsnummer: WO 1999/008228

(56) Entgegenhaltungen:
- DE-A- 4 423 307
- US-A- 5 404 152
- "EARS CUBES FOR OBJECT CONTROL IN REALTIME 3D GRAPHICS" IBM TECHNICAL DISCLOSURE BULLETIN, Bd. 33, Nr. 1A, 1. Juni 1990, Seite 55/56 XP000120023

## Beschreibung

Die Erfindung betrifft eine Anordnung mit zwei Drehknöpfen, wobei mit einem ersten Drehknopf ein erster Wert und mit einem zweiten Drehknopf ein zweiter Wert einstellbar ist. Diese von den Drehknöpfen gelieferten Werte werden auf einem Anzeigeelement gezeigt. Bereiche, in denen veränderbare Werte grafisch dargestellt werden, sind häufig zu finden. Derartige Systeme werden beispielsweise bei Navigationssystemen eingesetzt.

In dem US Patent 5,404,152 ist ein System beschrieben, welches ebenfalls mit drehbaren Knöpfen realisiert ist. Die Drehknöpfe sind auf einer Achse angeordnet, auf der sich auch ein Taster befindet, mit dem die Koordinate festgelegt oder bestätigt wird. Die beiden Drehknöpfe verändern die x- und y-Koordinaten von Anzeigebildern. In Kombination mit dem Taster sind auch Veränderungen von drei oder mehr Dimensionen möglich. Da sich die Drehknöpfe um eine konzentrische Achse drehen, wird die Handhabung unbequemer. Die Einstellung von zwei Werten erfordert ein Umgreifen von einem Drehknopf auf den anderen. Mit dem erwähnten System sind meist zwei Drehungen notwendig, womit sich ein hoher Einstellaufwand ergibt, da meist eine Änderung des x- und des y-Werts erforderlich ist. Außerdem muß eine Koordinate noch mit dem Taster bestätigt werden. Die Bedienung dieses Gerätes setzt eine ruhige Position voraus, die unter Umständen nicht gegeben ist.

Insofern ähnelt dieses System einer Mouse, bei der gleichzeitig die x- und y-Koordinaten geändert werden und Positionen durch Tastendruck bestätigt werden.
Bedien- oder Steuerelemente zum Einstellen von Werten, z.B. Koordinaten von Anzeigebildern, sind bereits in Mouse- oder Trackballform realisiert. Die Bedienung einer Mouse oder gerade eines Trackballs erfordert vom Bediener eine geübte Hand. Eine Mouse erfordert immer einen ebenen waagerechten Untergrund, ein Trackball ist gewöhnungsbedürftig und ist nur in einer ruhigen Position des Gesamtsystems, z.B. auf einem Tisch oder einem Fahrzeug im Stillstand, zu bedienen. Unter Einsatzbedingungen in fahrenden Fahrzeugen oder beim Bewegen im Gelände ist deren Gebrauch nicht möglich.

Der Erfindung liegt die Aufgabe zugrunde, die Einstellbarkeit von auf Anzeigen darzustellenden Werten so einfach wie möglich und ohne besondere Voraussetzungen zu gestalten.

Erfindungsgemäß wird diese Aufgabe bei einer Anordnung der eingangs genannten Art dadurch gelöst, daß der zweite Drehknopf auf dem ersten Drehknopf in einem Abstand zu dessen Drehachse angebracht ist.

Gegenüber den bekannten Anordnungen basiert diese Erfindung auf dem Gedanken, die Einstellelemente der Anordnung sinnvoll zu kombinieren und deren Handhabung so einfach und robust wie möglich zu machen. Durch diese besondere Anordnung der Drehknöpfe ist es auch einem ungeübten Benutzer möglich, die Anordnung ohne Vorkenntnisse leicht zu bedienen.

Besonders zweckmäßig ist die Anzeige in Polarkoordinaten, wobei der erste Wert eine Richtung eines Anzeigebildes und der zweite Wert einen Betrag des Anzeigebildes von einem Ausgangspunkt zu einem frei wählbaren Zielpunkt darstellt. Man erreicht damit keine Reduzierung der Parameter, aber die Anzahl der Einstellungen wird gesenkt, da häufig nur der Winkel oder der Betrag des Anzeigebildes geändert werden muß.

Da sowohl Drehschalter als auch Drehknöpfe einsetzbar sind, ist dadurch eine Anpassung des mechanischen Drehwiderstandes und somit auch eine sichere, an schwierigste Außenumgebungen angepaßte Einstellbarkeit möglich.

Vorteilhaft ist, daß bei Drehung des ersten Drehknopfes keine Wertänderung des zweiten Drehknopfes erfolgt, unabhängig davon, ob der zweite Drehknopf nur mit dem ersten Drehknopfes mitgedreht wird und so nur seine Position bezüglich der Drehknopfanordnung verändert oder ob er als eine Art Kurbel benutzt, auch um seine eigene Achse gedreht wird. Nach der Einstellung des Wertes des ersten Drehknopfes kann, ohne die Hand vom zweiten Drehknopf wegzunehmen, dieser gedreht werden und somit der Wert des zweiten Drehknopfes verstellt werden.

Die beschriebene Anordnung ist von Bedingungen, wie sie Geräte aus dem Stand der Technik erfordern, unabhängig. Die Bedienung kann im Gegensatz zu einem Trackball oder zu einer Mouse auch unter unruhigen Bedingungen erfolgen, z.B. bei tragbaren Navigationssytemen, bei Einstellungen in auf unebenen Wegen fahrenden Fahrzeugen oder in vom Seegang bewegten Wasserfahrzeugen. Die Einstellelemente erfordern keine waagerechte ebene Fläche. Die Anordnung bleibt immer an definierter Stelle, im Vergleich zur Mouse. Zur Einstellung von unterschiedlichen Werten muß die Hand nicht umgesetzt werden. Für den mobilen Einsatz ist es vorteilhaft, daß die Werte unabhängig voneinander und nacheinander eingestellt werden können, so daß erst nur die Richtung festgelegt wird und später durch stetige Annäherung an den Zielpunkt und Vergrößerung des dargestellten Kartenausschnitts eine stufenlose Feinjustage der Entfernung möglich ist.

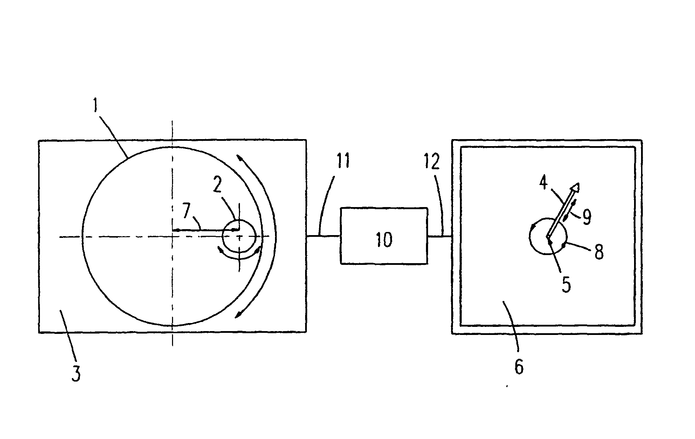

Ein Ausführungsbeispiel der Erfindung wird nachstehend anhand der Zeichnung näher erläutert. Diese zeigt eine schematische Darstellung eines kombinierten Drehknopfes und des Anzeigeelementes.

Der kombinierte Drehknopf besteht aus zwei einzelnen Drehknöpfen 1 und 2, wobei sich diese um je eine rechtwinklig zur gemeinsamen Oberfläche 3 stehende Achse drehen. Dabei ist der zweite Drehknopf 2 in einem Abstand 7 vom Mittelpunkt, der kleiner als der Radius des ersten Drehknopfes 1 und größer Null ist, angebracht. Das Anzeigebild ist hier durch einen Pfeil 4 dargestellt. Dieser Pfeil hat auf dem Anzeigeelement 6 seinen Ausgangspunkt 5, der den momentanen Standort darstellt. Dieser Ausgangspunkt 5 kann fest voreingestellt sein oder sich auf einem Anzeigeelement bewegen und den momentanen Standort darstellen. Mit einer Drehbewegung des ersten größeren Drehknopfes 1 bewegt sich dieser Pfeil 4 um den Ausgangspunkt 5 in einem zur Drehbewegung korrespondierenden Winkel 8. Mit diesem Drehknopf 1 wird die Richtung eingestellt. Mit der Drehung des Drehknopfes 2 wird ein Betrag oder eine Entfernung des Anzeigebildes eingestellt. Dabei verändert der das Anzeigebild darstellende Pfeil 4 auf dem Anzeigeelement 6, von seinem Ausgangspunkt 5 aus, seine Länge 9. Die Länge 9 des Pfeils 4 stellt die Entfernung oder den Betrag zwischen dem Ausgangspunkt und dem frei wählbaren Zielpunkt dar. Da bei einer Drehung des Drehknopfes 1 keine Änderung des Wertes von Drehknopf 2 vorgenommen wird, bewegt sich dieser zwar auf einer Kreisbahn um die Achse des Drehknopfes 1 und verändert seine Position in bezug auf die Drehknopfanordnung, verändert aber nicht die Länge 9 des Anzeigebildes 4, so daß in diesem Fall der Drehknopf 2 als eine Art Kurbel benutzt werden kann, um den Drehknopf 1 zu drehen. Durch diese Funktion ist es nicht erforderlich, zur Einstellung der zwei Werte die Hand umzusetzen.

Die beiden Werte, Betrag und Richtung, lassen sich mit jeder neuen Drehung wieder neu einstellen, welches beim Einsatz bei Navigationsgeräten praktisch ist, da ein Richtungswechsel schnell umsetzbar ist. Da durch eine erste Grobeinstellung und der ständigen Annäherung zum Ziel ein immer größerer Kartenausschnitt auf dem Anzeigeelement dargestellt wird, ist eine ständige Feinjustage des Zielpunkts möglich, so daß durch eine leichte Drehung des Drehknopfes 1 eine kleine Korrektur der Richtung sofort umgesetzt wird und auch eine Feinjustage der Entfernung zum Zielpunkt, die bei Bewegung in Richtung Ziel ständig kleiner wird, möglich ist.

Mit der Wahl unterschiedlicher Einstellelemente, wie Drehknöpfe oder Drehschalter ist das System an unterschiedliche Auflösungen anpassungsfähig. Ist die Auflösung grob, kann die Einstellung mit Drehschaltern, die entsprechend der dargestellten Auflösung angepaßte diskrete Werte liefern, erfolgen. Ein Vorteil dieser Lösung ist die beschränkte Anzahl möglicher Koordinatenwerte, wodurch der Auswerteaufwand eingeschränkt wird. Außerdem wird durch den mechanischen Widerstand des Drehschalters eine unbewußte Verstellung der Werte vermieden. Der Einsatz von Drehknöpfen, die kontinuierliche Werte liefern, wie z.B. Potentiometer, hat den Vorteil, daß alle möglichen Werte, auch nicht vorgegebene Zwischenwerte eingestellt werden können. Für Systeme, die in Bereichen, wie z.B. Schiffahrt eingesetzt werden, können so alle Punkte einer Karte angewählt werden. Diese Eigenschaft ist bei Fahrzeugnavigationssystemen nicht unbedingt erforderlich, da auf dem Land nicht alle Punkte erreichbar sind, z.B. Gebäudekomplexe, Wälder, Seen.

Mit den beiden erwähnten Drehknöpfen 1 und 2 werden mechanische Werte erzeugt, die in elektrische Signale 11 umgewandelt werden und deren Werte einer elektronischen Schaltung 10 oder einer Software zugeführt werden, die diese verarbeitet, um sie in Steuersignale 12 für die Polarkoordinaten des Pfeils 4 umzusetzen.

Die Unempfindlichkeit des Drehknopfes 2 bei Drehung des Drehknopfes 1 in Bezug auf dessen Wert kann mit einer einfachen Logikverknüpfung erfolgen, die bei Änderung des Wertes von Drehknopf 1 keine Änderung des Wertes von Drehknopf 2 registriert.

## Patentansprüche

1. Anordnung mit zwei Drehknöpfen, wobei mit einem ersten Drehknopf ein erster Wert und mit einem zweiten Drehknopf ein zweiter Wert einstellbar ist, **dadurch gekennzeichnet, daß** der zweite Drehknopf auf dem ersten Drehknopf in einem Abstand zu dessen Drehachse angebracht ist.

2. Anordnung nach Anspruch 1, **dadurch gekennzeichnet, daß** die Drehknöpfe mit Drehschaltem, die diskrete Werte liefern, gekoppelt sind.

3. Anordnung nach Anspruch 1, **dadurch gekennzeichnet, daß** die Drehknöpfe mit kontinuierliche elektrische Werte liefernden Elementen gekoppelt sind.

4. Anordnung nach Anspruch 1 **dadurch gekennzeichnet, daß** der erste Drehknopf unter Zuhilfenahme des zweiten Drehknopfes drehbar ist und sich dabei der Wert des ersten Drehknopfes verändert, daß sich dabei die Position des zweiten Drehknopfes bezüglich eines Bezugspunktes außerhalb der Anordnung der zwei Drehknöpfe verändert,und daß der dem zweiten Drehknopf zugeordnete Wert aber nur bei ausschließlicher Drehung des zweiten Drehknopfes ändert.

5. Navigationssystem mit zwei Drehknöpfen nach Anspruch 1 bis 4 und einem Anzeigeelement mit einem Anzeigebild **dadurch gekennzeichnet, daß** der erste Wert eine Richtung und der zweite Wert eine Länge des Anzeigebildes angibt.

6. Verfahren für die Verwendung der zwei Drehknöpfe in Navigationssystemen nach Anspruch 5 **dadurch gekennzeichnet, daß** mit dem ersten Drehknopf eine Richtung und mit dem zweiten Drehknopf eine Länge eines Anzeigebildes eingestellt wird.

## Claims

1. An arrangement with two rotary knobs by means of which a first value is adjustable with a first rotary knob and a second value with a second rotary knob, **characterized in that** the second rotary knob is provided on the first rotary knob at a distance to the axis of rotation thereof.

2. An arrangement as claimed in claim 1, **characterized in that** the rotary knobs are coupled to rotary switches which supply discrete values.

3. An arrangement as claimed in claim 1, **characterized in that** the rotary knobs are coupled to elements which supply stepless electrical values.

4. An arrangement as claimed in claim 1, **characterized in that** the first rotary knob is rotatable by means of the second rotary knob, during which the value of the first rotary knob changes, **in that** the position of the second rotary knob in relation to a point of reference outside the arrangement of the two rotary knobs changes during this, and **in that** the value associated with the second rotary knob changes only if exclusively the second rotary knob is rotated.

5. A navigation system comprising two rotary knobs as claimed in claims 1 to 4 and a display element with a display picture, **characterized in that** the first value indicates a direction and the second value indicates a length of the display picture.

6. A method of using the two rotary knobs in navigation systems as claimed in claim 5, **characterized in that** a direction is adjusted by means of the first rotary knob and a length of a display picture is adjusted by means of the second rotary knob.

## Revendications

1. Dispositif avec deux boutons rotatifs, où une première valeur peut être réglée avec un premier bouton rotatif et une deuxième valeur avec un deuxième bouton rotatif, **caractérisé par le fait que** le deuxième bouton rotatif est monté sur le premier bouton rotatif à une certaine distance de l'axe de rotation de ce dernier.

2. Dispositif selon la revendication 1 **caractérisé par le fait que** les boutons rotatifs sont couplés à des commutateurs rotatifs qui délivrent des valeurs discrètes.

3. Dispositif selon la revendication 1 **caractérisé par le fait que** les boutons rotatifs sont couplés à des éléments délivrant des valeurs électriques continues.

4. Dispositif selon la revendication 1 **caractérisé par le fait qu'**on peut faire tourner le premier bouton rotatif à l'aide du deuxième bouton rotatif et que, ce faisant, la valeur du premier bouton rotatif est modifiée, que, dans ce contexte, la position du deuxième bouton rotatif est modifiée par rapport à un point de référence se trouvant à l'extérieur du dispositif à deux boutons rotatifs et que, cependant, la valeur affectée au deuxième bouton rotatif n'est modifiée que par une rotation du deuxième bouton rotatif.

5. Système de navigation avec deux boutons rotatifs selon la revendication 1 à 4 et avec un élément d'affichage avec une image affichée **caractérisé par le fait que** la première valeur indique une direction et la deuxième valeur, une longueur de l'image affichée.

6. Procédé pour la mise en oeuvre des deux boutons rotatifs dans des systèmes de navigation selon la revendication 5 **caractérisé par le fait que**, avec le premier bouton rotatif, on règle une direction et, avec le deuxième bouton rotatif, une longueur d'une image affichée.
